(19) Europäisches Patentamt
European Patent Office
Office européen des brevets

(11) Publication number: **0 068 295**
**B1**

(12) **EUROPEAN PATENT SPECIFICATION**

(45) Date of publication of patent specification: **28.08.85**

(21) Application number: **82105254.5**

(22) Date of filing: **16.06.82**

(51) Int. Cl.[4]: **A 01 N 57/12,** A 01 N 65/00, A 01 N 57/20, A 01 N 57/14 // (A01N57/20, 57:12, 57:14, 57:12, 57:12, 55:02, 57:12, 47:36, 57:12, 47:30, 57:12, 47:22, 57:12, 47:14, 57:12, 43:78, 57:12, 43:64, 57:12, 39:04)

(54) **A new herbicidal composition, processes for its production and its use.**

(30) Priority: **27.06.81 DE 3125399**

(43) Date of publication of application:
**05.01.83 Bulletin 83/01**

(45) Publication of the grant of the patent:
**28.08.85 Bulletin 85/35**

(84) Designated Contracting States:
**AT BE CH DE FR GB IT LI LU NL SE**

(56) References cited:
**US-A-3 190 740**
**US-A-4 007 258**

(73) Proprietor: **A. Nattermann & Cie. GmbH**
**Nattermannallee 1**
**D-5000 Köln 30 (DE)**

(72) Inventor: **Ghyczy, Miklos, Dipl.-Chem., Dr.**
**Am Serviesberg 12**
**D-5000 Köln 41 (DE)**
Inventor: **Osthoff, Heinrich, Dr.**
**Rondorfer Strasse 51**
**D-5030 Hürth (DE)**
Inventor: **Etschenberg, Eugen, Dr.**
**Hirseweg 10**
**D-5000 Köln 41 (DE)**

(74) Representative: **Redies, Bernd, Dr. rer. nat. et al**
**Redies, Redies, Türk & Gille, Patentanwälte**
**Brucknerstrasse 20**
**D-4000 Düsseldorf 13 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 068 295 B1**

**Description**

This invention relates to a new herbicidal composition, to processes for its production and to its use.

In order to reduce crop losses by weeds and wild grasses in the cultivation of useful plants, it is now essential to use chemical weed control preparations (herbicides). A large number of chemical substances have been used for controlling weeds and wild grasses.

However, herbicides currently in use are still attended by some as yet unsolved problems. Chemical weed control preparations often have to be used in high concentrations and, as a result, can become a source of toxic pollution to the environment. The most important requirements which a weed control preparation has to satisfy include the highest possible selectivity and activity with respect to the weeds and wild grasses for which it is intended, a minimal effect on the useful plants and minimal interference with the biological environment.

Accordingly, the selectivity of a herbicide has to meet stringent demands. In order to reduce pollution of the environment, the quantity of herbicide required per hectare for controlling weeds and wild grasses should be kept as small as possible, although this often results in a loss of activity. Another requirement which has to be satisfied is ease of handling both during production and during application.

It has now surprisingly been found that the quantity of herbicide per hectare of cultivated area required for controlling weeds and wild grasses can be reduced by up to 40—60% and, in some cases, by up to 80% providing the herbicidally active substance or the mixture of several herbicidally active substances is used in conjunction with one or more de-oiled natural phosphatidyl products soluble in ethanol consisting of either

25 to 96% of phosphatidyl choline, or

96% of hydrogenated phosphatidyl choline, and

25 to 0% of phosphatidyl ethanolamine,

20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellents and/or other inert auxiliaries in a ratio by weight of from 1:0.5 to 1:10 without involving any risk of damage or harm to the useful plants.

In addition to greater economy of the treatment, the new herbicidal compositions have the advantage that their disintegration, particularly in the useful plants, is accelerated with the result that no residues of herbicides are present in the useful plants at harvest time. By virtue of this rapid disintegration, the waiting times (weed control pending harvest) can also be shortened. Finally, the phospholipides are generally natural and, in every case, non-toxic products which, by virtue of their nature and properties, do not themselves cause any pollution of the environment or have any adverse effect upon the waiting time. Some of the phospholipides are of course even used in foods.

To produce the new herbicidal compositions, the herbicides are mixed with the phospholipide(s) in a ratio by weight of from 1:0.5 to 1:10, preferably, in a ratio by weight of from 1:1 to 1:5. The weight of the phospholipide component is based on substantially pure phospholipide.

Suitable phospholipids are, for example, the commercially available phosphatidyl cholines or phosphatidyl choline mixtures such as

Phospholipon$^R$ 25

(25% of phosphatidyl choline, 25% of phosphatidyl ethanolamine, 20% of phosphatidyl inositol and the remaining 30% being composed of glycolipids, phosphatidic acids, lysophospholipids (such as lysolecithin) sugar and small amount of oil)

Phospholipon$^R$ 55

(55% of phosphatidyl choline, 25% of phosphatidyl ethanolamine, 2% of phosphatidyl inositol and the remaining 18% being composed of glycolipids, phosphatidic acids, lysophospholipids (such as lysolecithin) sugar and small amount of oil)

Phospholipon$^R$ 80

(80% of phosphatidyl choline, 10% of phosphatidyl ethanolamine, 2,5% of lysophosphatidyl choline (lysolecithin) and the remaining 7,5% being composed of other, naturally occurring phospholipids such as lysophosphatidyl ethanolamine, phosphatidyl inositol)

Phospholipon$^R$ 100

(96% of phosphatidyl choline, ≤3% of lysophosphatidyl choline (lyolecithin) ≤1% soybean oil)

Phospholipon$^R$ 100H

(96% of hydrogenated phosphatidyl choline, ≤3% of lysophosphatidyl choline (lysolecithin) ≤1% soybean oil)

Phospholipon$^R$ 38

(38% of phosphatidyl choline, 16% of N-acetyl phosphatidyl ethanolamine and 4% of phosphatidyl ethanolamine).

It is particularly preferred to use natural phosphatidyl cholines which may be produced by the processes described in the following patents: DE—PS No. 1,047,597, DE—PS No. 1,053,199, DE—PS No. 1,617,679, DE—PS No. 1,617,680, German Patent Applications DE—OS No. 30 47 048, DE—OS No. 30 47 012 or DE—OS No. 30 47 011.

In these processes, for instance soybeans are extracted with a lower aliphatic alcohol, in particular with 94 to 96% ethanol, which is filtered. The clear solution may be evaporated and is redissolved in a lower aliphatic alcohol which may contain 20% water. This solution is subjected to column chromatography on silicic acid gel at an elevated temperature which is 60 to 90°C if highly concentrated phosphatidyl choline is desired and which is elevated to temperatures below 60°C, if a product is desired which is to contain varying amounts of phosphatidyl ethanolamine. In the latter case the soybean material is at first de-oiled by known processes, for instance in an acetone solution with subsequent extraction in ethanol or by chromatographic purification over aluminium oxide in ethanol (DE—PS 1 047 517, 1 053 299, 1 617 679 or 1 617 680).

Suitable N-acyl phosphatidyl ethanolamines are, in particular, those in which the acyl group emanates from saturated or olefinically unsaturated fatty acids containing from 2 to 20 carbon atoms, more particularly from saturated fatty acids containing from 2 to 5 carbon atoms or from saturated or mono-olefinically unsaturated fatty acids containing 14, 16, 18 or 20 carbon atoms.

Virtually any herbicide may be used as the herbicide. Thus, it is possible to use compounds from the group comprising photosynthesis inhibitors, breathing inhibitors, growth promoters, milose inhibitors and germination inhibitors.

The following are particularly suitable examples:

1. phenoxy carboxylic acid derivatives corresponding to the following general formula

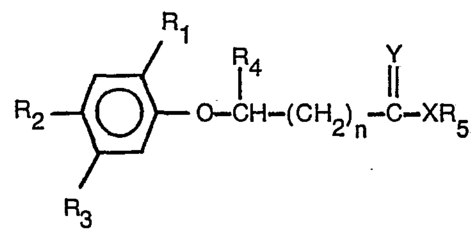

I

in which

a) $R_1$, $R_2$ and $R_3$ may be the same or different and represent H, $CH_3$ or halogen, particularly chlorine, with the proviso that at most two radicals represent H,

$R_4$ represents H or $CH_3$,

n=0—2,

Y=O or S,

X=O, NH or S,

$R_5$—where X=O—represents H, linear or branched $C_1$—$C_{12}$-alkyl, hydroxyalkyl, such as hydroxyethyl, trifluoromethyl-phenyl or alkali or alkaline-earth cations and, in particular, ammonium cations, i.e. salts of the acids with ammonia or organic amines, such as for example hydroxyethylamine or trihydroxyethylamine, or

$R_5$—where X=NH—represents H, $NH_2$, phenyl optionally substituted by 1 to 3 halogen atoms, heterocyclic groups such as, 2-thiazolyl, or

b) $R_1$ and $R_3$ represent H,

$R_2$ represents

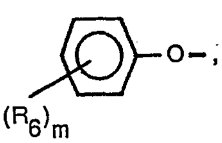

$R_4$ and $R_5$ have the same meaning as in a),

$R_6$ represents $CH_3$, halogen or trifluoromethyl and

m=1—3.

The substances are known compounds which are described in the following patents: US—PS No. 3,352,897, US—PS No. 2,390,942, DE—PS No. 915,876, DE—AS No. 11 15 515, FR—PS No. 1,222,916, GB—PS No. 822,199, GB—PS No. 573,477, DE—AS No. 11 24 296, GB—PS No. 1,041,982, CA—PS No. 570,065, US—PS No. 3,076,025.

The following are examples of compounds corresponding to general formula I: 4-chlorophenoxyacetic acid-N,O-methylamide, 2,4-dichlorophenoxyacetic acid, 2,4-dichlorophenoxyacetic acid hydrazide, 2-methyl-4-chlorophenoxyacetic acid hydrazide, 2-chloro-4-fluorophenoxyacetic acid, 2-chloro-4-fluorophenoxyacetic acid, butyl ester, 4-chloro-2-methyl phenoxyacetic acid, 4-chloro-2-methylphenoxythioacetic acid, N-(2-chlorophenyl)-4-chloro-2-methylphenoxyacetamide, N-(3-trifluoromethyl-phenyl)-2,4-dimethyl phenoxy acetamide, 2,4-dimethylphenoxyacetic acid, 2,4,5-trichlorophenoxyacetic acid, 2-(4-chlorophenoxy)propionic acid, 2-(2-methylphenoxy)-propionic acid, 2-(2-methyl-4-chloro-

phenoxy)-propionic acid (mecoprop), 2-(2-methyl-4-chlorophenoxy)-propionic acid-N-(trifluoromethylphenyl)-amide, 2-(2,4,5-trichlorophenoxy)-propionic acid (fenoprop), 2-[4-(2,4-dichlorophenoxy)-phenoxy]-propionic acid, 2-[4-(4-chlorophenoxy)-phenoxy]-propionic acid, 4-(4-chlorophenoxy)-butyric acid, 4-(4-chloro-2-methylphenoxy)butyric acid (MCPB), 4-(2,4,5-trichlorophenoxy)-butyric acid, but more particularly 2,4-dichlorophenoxyacetic acid (2,4-D) and its salts and esters, such as the sodium or ammonium salt, or salts with ethanolamine or triethanolamine, 2,4,5-trichlorophenoxyacetic acid (2,4,5-triphenac) and its salts and esters, which may be used in combination with a phospholipide in particular as a selective leaf herbicide for controlling dicotyledonous weeds such as, for example, knot-grasses, camomile and thistle in cereal crops, corn, rice, sugar cane or grassland.

2. Urea derivatives corresponding to the following general formula

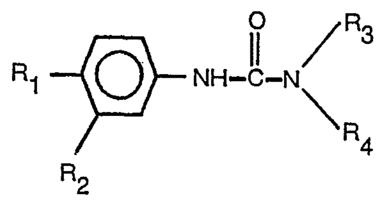

II

in which

$R_1$ and $R_2$ represents H, linear or branched $C_1$—$C_4$-alkyl, cycloalkyl, halogen, particularly chlorine, trifluoromethyl, nitro, alkoxy, optionally halogen-substituted phenoxy, chlorodifluoromethylthio at most one of the groups $R_1$ and $R_2$ representing H,

$R_3$ represents H, $CH_3$, $C_2H_5$,

$R_4$ represents H, cycloalkyl, $C_1$—$C_4$-alkyl, $C_4$-alkynyl, methoxy.

The compounds corresponding to general formula II are known compounds and are described in the following patents:

US—PS No. 2,655,447, DE—PS No. 935,165, DE—PS No. 951,181,

DE—OS No. 20 39 041, DE—OS No. 21 07 774, DE—OS No. 21 37 992, DE—OS No. 20 50 776, DE—PS No. 968,273, DE—OS No. 19 05 598.

The following are examples of compounds corresponding to formula II:

3-phenyl-1,1-dimethylurea (fenuron),
1-(2-methyl-cyclohexyl)-3-phenylurea (siduron),
3-(4-isopropyl-phenyl)-1,1-dimethyl urea (isoproturon),
3-(4-t-butyl-phenyl)-1,1-dimethylurea,
3-(4-chlorophenyl)-1,1-dimethylurea (monuron),
3-(3,4-dichlorophenyl)-1,1-dimethylurea (diuron),
N-(3,4-dichlorophenyl)-N-diethylurea,
1-n-butyl-1-methyl-3-(3,4-dichlorophenyl)-urea (neburon),
N-(3-trifluoromethylphenyl)-1,1-dimethylurea (fluometuron),
3-(3-chloro-4-methylphenyl)-1,1-dimethylurea (chlortoluron),
3-(4-chlorophenyl)-1-methyl-1-(1-methyl-prop-2-ynyl)-urea (buturon),
1-(α,α-dimethylbenzyl)-3-(4-methylphenyl)-urea,
3-(3-chloro-4-methoxyphenyl)-1,1-dimethylurea (metoxuron)
3-[(4-chlorophenoxy)-phenyl]-1,1-dimethylurea (chloroxuran),
3-(4-chlorophenyl)-1-methoxy-1-methylurea (monolinuron),
3-(4-bromophenyl)-1-methoxy-1-methylurea (metobromuron),
3-(3,4-dichlorophenyl)-1-methoxy-1-methylurea (linuron),
3-(3-chloro-4-bromophenyl)-1-methoxy-1-methylurea (chlorbromuron),
3-[3-chloro-4-(chlorodifluoromethylthio)-phenyl]-1,1-dimethylurea (thiochlormethyl), but more particularly 3-(4-isopropyl-phenyl)-1,1-dimethylurea (isoproturon) or 3-(3,4-dichlorophenyl)-1-methoxy-1-methylurea (linuron) which may be used in combination with phospholipides in particular as selective pre-emergence and post-emergence herbicides for controlling wild grasses such as, for example Alopercurus myosuroides, Apera spicaventi, Poa spp., Avena fatura, and annual weeds in winter wheat, winter barley and rye or weeds in vegetable plantations, orchards and vineyards.

3. Organic phosphorus and arsenic compounds, such as O,O-diisopropyl-S-[2-(phenylsulfonylamino)-ethyl]-dithiophosphate (bensulide),

N-(phosphonomethyl)-glycine (glyphosate), salts of ethyl carbamoyl phosphoric acid, the disodium salt of methylarsenic acid, dimethylarsinic acid.

4. Alcohols and aldehydes, such as ethyl xanthogene disulfide, alcyl alcohol, acrolein.

5. Substituted alkane carboxylic acids such as, for example, monochloroacetic acid,
N,N-diallylchloroacetamide (allidochlor),
2,3,6-trichlorophenylacetic acid (chlorfenac),
benzamido-oxyacetic acid (benzadox),
4-chloro-2-oxobenzothiazolin-3-ylacetic acid (benazolin),
N,N-dimethyl-2,2-diphenyl acetamide (diphenamid),

trichloroacetic acid,
ethylene glycol-bis-(trichloroacetate),
2-chloro-3-(4-chlorophenyl)-propionic acid methyl ester (chlorphenprop),
2,2-dichloropropionic acid,
β-naphthyloxy-acetic acid methyl ester,
N,N-dimethyl-2-(1-naphthyloxy)propionamide (napromid).

6. Aromatic carboxylic acid derivatives corresponding to the following general formula

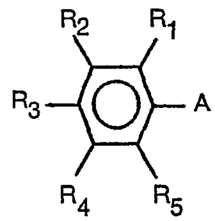

III

in which

$R_1$ to $R_5$ may be the same or different and represent H, halogen, $NH_2$, methoxy, $—COOCH_3$, —COONH-naphthyl, $NO_2$, at most four groups representing H,
A represents $—COOR_6$, $—CONR_7R_8$, $—CSNR_7R_8$, $—COSR_6$, —CN,
$R_6$ represents H, alkali, alkaline-earth, alkyl, hydroxy alkyl,
$R_7$ represents H, alkyl,
$R_8$ represents H, alkyl, hydroxyalkyl, benzyl except those compounds of formula III wherein $R_1$ and $R_3$ both are nitrogen, $R_2$ and $R_4$ both are hydrogen, $R_5$ is branched alkyl and $R_6$ is $—CO—C_{2-4}$-alkenyl or branched alkoxy.

The compounds corresponding to general formula III are known compounds and are described for example in the following patents: US—PS No. 027,248, GB—PS No. 987,253, US—PS No. 3,534,098, US—PS No. 3,013,054, US—PS No. 3,081,162, US—PS No. 2,923,634 and GB—PS No. 671,153.

The following are examples of compounds corresponding to formula III:
2,6-dichlorobenzonitrile (dichlorbenil),
2,6-dichlorobenzoic acid thioamide (chlorthiamid),
N-(1,1-dimethyl-2-propynyl)-3,5-dichlorobenzamide (propyzamid),
3-amino-2,5-dichlorobenzoic acid (chloramben),
3,6-dichloro-2-methoxybenzoic acid (dicamba),
2,3,6-trichlorobenzoic acid,
dimethyl-2,3,5,6-tetrachloroterephthalate (chlorthal),
N-(1-naphthyl)-phthalamidic acid (naptalam).

7. Phenol derivatives corresponding to the following general formula

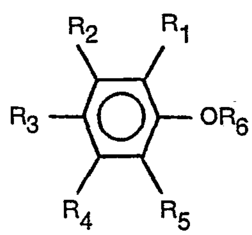

IV

in which

$R_1$ to $R_5$ may be the same or different and represent H, $NO_2$, linear or branched $C_1—C_4$-alkyl, halogen, nitrile, trifluoromethyl, at most four groups representing H and $R_6$ represents H, $—COCH_3$, —CSOalkyl, $—COCH_2$-Cl, —COOalkyl, —N=CH-aryl, phenyl optionally substituted by trifluoromethyl, nitro, alkyl, $NH_2$, alkoxy, halogen, except those compounds wherein $R_1$ is chlorine, $R_2$ is chlorine or hydrogen, $R_3$ is chlorine, methoxy or hydrogen, $R_4$ is chlorine or nitril, $R_5$ is chlorine or hydrogen and A is nitril, methoxy or nitro.

The compounds corresponding to general formula IV are known compounds and are described in the following patents: GB—PS No. 1,067,031, US—PS No. 2,192,197, GB—PS No. 1,096,037, DE—PS No. 1,088,757, US—PS No. 3,080,225, US—PS No. 3,652,645, DE—OS No. 14 93 512.

The following are examples of compounds corresponding to general formula IV:
3,5-dibromo-4-hydroxybenzonitrile (bromoxynil),
4-hydroxy-3,5-diiodobenzonitrile (ioxynil),
6-methyl-2,4-dinitrophenol (DNOC),
2-sec-butyl-4,6-dinitrophenol (dinoseb),
3,5-dibromo-4-hydroxy benzaldehyde-O-(2,4-dinitrophenyl)oxime (bromofenoxin),
2-sec-butyl-4,6-dinitrophenyl acetate (dinosebactat),
2,4-dichlorophenyl-4'-nitrophenyl ether (nitrofen),
5-(2,4-dichlorophenoxy)-2-nitrobenzoic acid methyl ester (bifenox),

2,4′-dinitro-4-trifluoromethyl diphenyl ether (fluorodifen), pentachlorophenol (PCP),
2,4-dinitro-3-methyl-6-tert.-butylphenyl acetate,
2,4-dinitro-6-sec-amylphenol,
2,4,6-trichloro-4′-nitrodiphenyl ether,
3-methyl-4′-nitrodiphenyl ether,
2,4′-dinitro-4-trifluoromethyl diphenyl ether,
2,4-dichlorophenyl-3′-methoxy-4′-nitrophenyl ether, but especially 2,4-dinitro-6-methyl phenol which may be used in combination with phospholipides in particular for controlling seed weeds such as, for example, chickweed, goose grass, camomile, knot-grass, speedwell, dead nettle and corn marigold in cereal crops, corn or vineyards, optionally even in conjunction with a hormone herbicide, or pentachlorophenol or
2,4,6-trichlorophenyl-4′-nitrophenyl ether, particularly for controlling barnyard grass and bullrushes in paddy fields.

8. Anilines corresponding to the following general formula

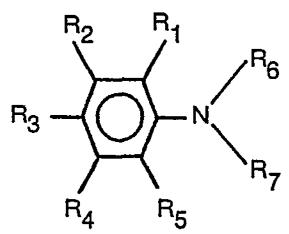

V

in which

$R_1$ represents H, $C_1$—$C_3$-alkyl or nitro,
$R_2$ represents H, halogen or $NH_2$,
$R_3$ represents $C_1$—$C_3$-alkyl, H, —$CF_3$, —$SO_2CH_3$ or —$SO_2NH_2$,
$R_4$ represents H or $C_1$—$C_3$-alkyl,
$R_5$ represents H, $NO_2$ or $C_1$—$C_3$-alkyl,
$R_6$ represents H, $C_1$—$C_3$-alkyl, $C_1$—$C_4$-alkoxymethyl or cyclopropylmethyl and
$R_7$ represents linear or branched $C_1$—$C_5$-alkyl or linear or branched $C_1$—$C_7$-acyl.

The compounds corresponding to formula V are known compounds and are described in the following patents: US—PS No. 3,257,190, US—PS No. 3,546,295, US—PS No. 2,863,752, DE—AS No. 11 66 547, US—PS No. 3,020,142, DE—AS No. 10 39 779, US—PS No. 3,442,945, GB—PS No. 1,164,160, DE—OS No. 22 41 408.

The following are examples of compounds corresponding to formula V:
N,N-dipropyl-2,6-dinitro-4-trifluoromethylanilide (trifluralin),
N-ethyl-N-butyl-2,6-dinitro-4-trifluoromethylaniline (benfluralin),
N-cyclopropyl-methyl-N-propyl-2,6-dinitro-4-trifluoromethylaniline (profluralin),
3-diethylamino-2,4-dinitro-6-trifluoromethylaniline (dinitramine),
N-(1-ethylpropyl)-3,4-dimethyl-2,6-dinitroaniline (penoxyn),
N,N-dipropyl-4-methylsulfonyl-2,6-dinitroaniline (nitralin),
4-(dipropylamino)-3,5-dinitrobenzenesulfonamide (oryzalin),
N,N-dipropyl-2,6-dinitro-4-isopropylaniline (isopropalin),
N-isopropyl-α-chloracetanilide (propachlor),
α,α-dimethyl valeryl-4-chloroanilide (monalid),
N-(3-chloro-4-methylphenyl)-2-methylvaleramide (pentanochlor),
propionic acid-3,4-dichloroanilide (propanil),
2′,6′-diethyl-N-(methoxymethyl)-2-chloroacetanilide (alachlor),
2′,6′-diethyl-N-(butoxymethyl)-2-chloroacetanilide (butachlor),
2-(N-benzoyl-3,4-dichloroanilino)-propionic acid ethyl ester, but especially
3′,4′ dichloropropionanilide (propanil).

9. Carbamates corresponding to the following general formula

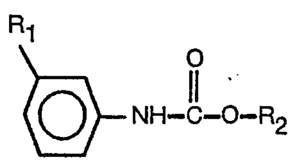

VI

in which

$R_1$ represents H, halogen, particularly chlorine, $CH_3$ or $NHCOOC_2H_5$ and
$R_2$ represents H, linear or branched $C_1$—$C_4$-alkyl, haloalkyl, haloalkynyl, alkynyl, 3-(methoxycarbamoyl)-phenyl.

The compounds corresponding to formula VI are known compounds and are described for example in

the following patents: US—PS No. 3,334,989, DE—AS No. 11 59 432, DE—AS No. 11 88 588, US—PS No. 3,150,179, GB—PS No. 574,995, US—PS No. 2,695,226, DE—OS No. 15 67 151.

The following are examples of compounds corresponding to formula VI:
isopropyl-N-phenylcarbamate (propham),
2 phenylcarbamoyloxy-N-ethylpropionamide (carbetamide),
isopropyl-N-(3-chlorophenyl)-carbamate (chlorpropham),
4-chloro-2-butynyl-N-(3-chlorophenyl)-carbamate (barban),
1-methylpropargyl-N-(3-chlorophenyl)-carbamate (chlorbufam),
methyl-N-(4-aminobenzene-sulfonyl)-carbamate (asulam),
2,6-di-tert.-butyl-4-methylphenyl-N-methylcarbamate (terbucarb),
3-methoxycarbonylaminophenyl-N-(3-methylphenyl)-carbamate (phenmedipham),
3-ethoxycarbonylaminophenyl-N-phenylcarbamate (desmedipham) but especially
isopropyl-N-phenylcarbamate,
3-methoxy carbonylamino-phenyl-N-(3-methylphenyl)-carbamate or
3-ethoxycarbonylamino-phenyl-N-phenyl carbamate.

10. Triazines corresponding to the following general formula

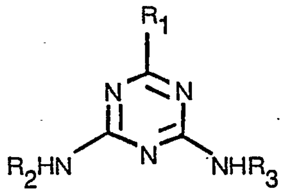

VII

in which

$R_1$ represents halogen, particularly chlorine, methylthio or methoxy, and

$R_2$ and $R_3$ represent linear or branched $C_1$—$C_4$-alkyl optionally substituted by a nitrile group or azole group.

The compounds corresponding to formula VII are known compounds and are described for example in the following patents: DE—OS No. 15 42 733, CH—PS No. 329,277, CH—PS No. 337,019, DE—AS No. 16 70 528, DE—AS No. 11 86 070.

The following are examples of compounds corresponding to formula VII:
2-azido-4-methylthio-6-isopropylamino-1,3,3-triazine (aziprotryn),
2,4-bis-(ethylamino)-6-chloro-1,3,5-triazine (simazin),
2-ethylamino-4-chloro-6-isopropylamino-1,3,5-triazine (atrazine),
2-methylamino-4-methylthio-6-isopropylamino-1,3,5-triazine (desmetryne),
2-(4-ethylamino-6-chloro-1,3,5-triazin-2-ylamino)-2-methylpropiononitrile (cyanzine),
2-ethylamino-4-tert.-butylamino-6-chloro-1,3,5-triazine (terbutylazin),
2-chloro-4,6-bis-(isopropylamino)-1,3,5-triazine (propazin),
2-ethylamino-4-methylthio-6-isopropylamino-1,3,5-triazine (ametryne),
2-ethylamino-4-sec.-butylamino-6-methoxy-1,3,5-triazine (secbumeton),
2-ethylamino-4-tert.-butylamino-6-methoxy-1,3,5-triazine (terbumeton),
2-methoxy-4,6-bis-(isopropylamino)-1,3,5-triazine (prometon),
2-ethylamino-4-tert.-butylamino-6-methylthio-1,3,5-triazine (terbutryne),
2-methylthio-4,6-bis(isopropylamino)-1,3,5-triazine (prometryn),
2-(3-methoxypropylamino)-4-methylthio-6-isopropylamino-1,3,5-triazine (methoprotryne), but especially
2-(4-ethylamino-6-chloro-1,3,5-triazin-2-ylamino)-2-methylpropiononitrile).

11. Triazinones corresponding to the following general formula

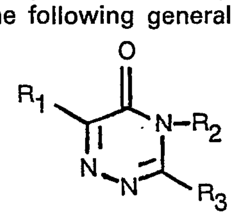

VIII

in which

$R_1$ represents alkyl, substituted aryl or a cycloaliphatic radical,

$R_2$ represents $NH_2$, —NH-alkyl or N=CH-alkyl and

$R_3$ represents $C_1$—$C_4$-alkyl, alkoxy or alkylthio.

The compounds corresponding to formula VIII are known compounds and are described, for example in the following patents: US—PS No. 3,671,523, DE—OS No. 24 07 144 and US—PS No. 3,847,914.

The following are examples of compounds corresponding to formula VIII:
4-amino-6-tert.-butyl-3-methylthio-1,2,4-triazin-5(4H)-one (metribuzin),
6-tert.-butyl-4-isobutylidene-amino-3-methylthio-1,2,4-triazin-5(4H)-one (isomethiozin), but especially
4-amino-3-methyl-6-phenyl-1,2,4-triazin-5(4H)-one (metamitron).

12. Other herbicides which may be used include,
3,6-epoxycyclohexane-1,2-dicarboxylic acid (endothal),
S-ethyl-N,N-diethylthiocarbamate (ethiolat),
S-ethyl-N,N-hexamethylene thiocarbamate (molinat),
S-ethyl-N,N-dipropyl thiocarbamate (EPTC),
S-ethyl-N-ethyl-N-cyclohexyl thiocarbamate (cyclat),
S-ethyl-N,N-diisobutyl thiocarbamate (butylat),
S-propyl-N,N-dipropyl thiocarbamate (vernolat),
S-propyl-N-ethyl-N-butyl thiocarbamate (pebulat),
2-chloroallyl-N,N-diethyl dithiocarbamate (sulfallat),
S-(2,3,3,-trichloroallyl)-N,N-diisopropylthiocarbamate (trillat),
S-2,3-dichloroallyl)-N,N-diisopropylthiocarbamate (diallat),
S-(4-chlorobenzyl)-N,N-diethylthiocarbamate (benthiocarb),
1,3-dimethyl-1-(5-trifluoromethyl-1,3,4-thiodiazol-2-yl)urea (thiazfluron),
1-(5-ethylsulfonyl-1,3,4-thiadiazol-2-yl)-1,3-dimethyl urea (sulfodiazol),
N-isobutyl-2-oxo-1-imidazolidinecarboxamide (isocarbamid),
1-(2-benzothiazolyl)-1,3-dimethyl urea (methabenzthiazuron),
1,1-ethylene-2,2′-dipyridylium dibromide (diquat),
1,1′-dimethyl-4,4′-dipyridylium dichloride (paraquat).

The individual herbicides are used either on their own or in combination with other herbicides following the addition of phospholipids.

The new herbicidal compositions may be applied by standard methods, for example as soil or leaf herbicides or as systemic herbicides or contact herbicides before or after sowing or after emergence, according to requirements.

The new herbicidal compositions are used primarily for controlling weeds and wild grasses such as, for example,
Alopeurus myosuroides,
Bromus tectorum,
Cyperus rotundus,
Digitaria sanquinalis,
Echinochlora crus galli,
Eleusine indica,
Festuca ovina,
Lolium perenne,
Phleum protense,
Setaria italica,
Poa annua,
Setaria viridis,
Sorghum halepense,
Abutilon theophrasti,
Amaranthus retroflexus,
Anthemis arvensis,
Chenopodium album,
Chrysanthemum segetum,
Convolutus arvensis,
Agropyron repens,
Apera pica-venti,
Arrhenaterum elastius bulbosum,
Pennisetum clandestinum,
Ischaemum rugosum,
Rottboellia exaltata,
Imperata cylindrica,
Poa trivialis,
Leptochloa filiformis,
Setaria faberii,
Galium aparine,
Cirsium arvense,
Atriplex spp., which hinder or are harmful to the cultivation of useful plants in one-crop systems.

Examples of useful plants which may be protected against weeds and wild grasses are oats, barley, rice, millet, wheat, corn, sugar beet, cane sugar, potatoes, soya beans, cotton, tobacco, coffee, fruit, vegetables or vines.

The new herbicidal compositions may be applied to the soil or to the plants by standard methods in the form of dusting powders, scattering preparations, granulates or as aqueous preparations in the form of soluble concentrates, emulsifiable concentrates or dispersible concentrates.

In most cases, the application of the herbicides requires vehicles or auxiliary substances to enable

relatively small quantities of the active ingredient to be uniformly distributed over large areas. In addition to vehicles, it is possible to use diluents, wetting agents, stabilisers, gelating agents, evaporation accelerators, penetrating agents or extenders.

Suitable vehicles are, for example, talcum, kaolin, bentonite, silica gel, lime or crushed rock. Further auxiliaries are, for example, surface-active compounds, such as soaps (fatty acid salts), fatty alcohol sulfonates or alkyl sulfonates. Gelatin, casein, albumin, starch or methyl cellulose may be used as stabilisers or protective colloids. To produce the new herbicidal compositions, the corresponding phospholipide is dissolved in a suitable solvent such as, for example, toluene, ethyl acetate, xylene, petrol, methanol or ethanol, or in mixtures of these solvents. The choice of the solvent will depend upon the solubility of the herbicide used. The herbicide or a commercially available herbicidal preparation is then dissolved in the phospholipide solution, optionally by heating. On completion of dissolution, the solvent is distilled off *in vacuo* while heating. The product thus obtained is then processed into standard marketable formulations, optionally by the addition of suitable inert auxiliaries, such as fillers, swelling agents, emulsifiers, wetting agents, propellents, or—in the production of granulates—a disintegrating agent. In the production of granulates, the granulates may optionally be coated with phospholipids. The phospholipid coating has the advantage of better handling properties (improvement in odour, reduction in the aggressiveness of the chemical herbicide).

The new herbicidal mixtures may also be prepared by dissolving or suspending the herbicide or a standard commercial herbicidal preparation, the phospholipid and the required auxiliaries together in a solvent or solvent mixture by heating and then distilling off the solvent(s) *in vacuo*. The mixture obtained in this way is immediately ready for use.

In the case of herbicides which are soluble in water or water/alcohol mixtures, the herbicide is with advantage first dissolved in water or water/alcohol mixtures, after which the phospholipid or phospholipid mixture is processed to form a solution or emulsion either by stirring or by the application of ultrasonic waves. The emulsifiers required, if any, may be added before or after this stirring operation. The emulsion or solution thus obtained is freed from the solvent mixture or from water in the usual way, for example by distillation, spray drying, freeze drying. The resulting product may be used as a dry product, optionally after the addition of auxiliaries and fillers, The product may also be re-emulsified or redissolved in water to which suitable auxiliaries have been added and used as a liquid product.

Example 1

Production of 1 litre of an emulsion concentrate (95 g/l) containing MCPA (2-methyl-4-chlorophenoxyacetic acid) as the active ingredient:

95 g of MCPA, 200 g of Phospolipon[R] 55 in 100 ml of ethanol, 8 g of Tween 80, 2 g of Span 80 and 200 ml of ethanol are combined, dissolved while stirring and made up to 1 litre with Shellsol A.

The effectiveness against dicotyledonous weeds of 1 kg of this formulation containing 95 g of MCPA/litre is equivalent to that of 1 kg of a standard commercial product containing 190 g/l.

Example 2

1 kg of a spraying powder (12.5%) containing linuron as its active ingredient is prepared by dissolving 125.0 g of linuron, 125.0 g of Phospholipon[R] 55 in 100 ml of ethanol and 60.0 g of PEG 4000 while heating in 300 ml of ethanol and 100 ml of toluene. The resulting solution is homogeneously kneaded with 670 g of bentonite (colloidal), after which the product is dried, ground and sieved.

1 kg of this 12.5% spraying powder is as effective against weeds in potato cultivation for example as 0.5 kg of a standard commercial product containing 50% of linuron.

Example 3

1 kg of a granulate (5%) containing naptalam as its active ingredient is prepared by dissolving 50 g of naptalam, 70 g of Phospholipon[R] 80 in 70 ml of ethanol and 15 g of lignin sulfonate in solution in water in 350 ml of warm DMF and homogeneously kneading the resulting solution with 855 g of "precipitated calcium carbonate". The product is dried and ground and then mixed with 100 ml of a 10% gelatin solution, resulting in the formation of pellets. The quantity of gelatin may vary slightly according to the quality of the calcium carbonate. The pellets are dried in a fluidised bed granulator.

1 kg of this 5% granulate is as effective in controlling weeds in the cultivation of soya beans for example as a standard commercial product containing 10% of naptalan.

Example 4

1 litre of an emulsion concentrate (50 g/l) containing DNOC (2,4-dinitro-6-methylphenol) is prepared as follows:

50 g of DNOC, 100 g of Phospholipon[R] 55 in 150 ml of ethanol, 8 g of Tween 80, 2 g of Span 80 and 50 ml of Cellosolve are made up to 1 litre with Shellsol N and dissolved.

0.5 litre of this solution is as effective against broad-leaved weeds in the cultivation of cereals as 1 litre of a standard commercial formulation having the same concentration.

Example 5

1 litre of an emulsion concentrate (100 g/l) containing pentachlorophenol (PCP) as its active ingredient is prepared as follows:

100 g of PCP, 120 g of Phospholipon[R] 25, 8 g of Tween 80, 2 g of Span 80, 30 g of Cellosolve and 200 ml of xylene are made up to 1 litre with Shellsol A and dissolved.

0.5 litre of this 10% solution is just as effective against weeds as 1 litre of a standard commercial formulation having the same concentration.

Example 6

1 litre of an emulsion concentrate (50 g/l) containing 2,4,6-trichlorophenyl-4'-nitrophenyl ether (CNP) as its active ingredient is prepared as follows:

50 g of CNP, 75 g of Phospholipon[R] 55 in 50 ml of ethanol, 10 g of Marlowet IHF and 200 ml of xylene are made up to 1 litre with Shellsol A and dissolved.

0.5 kg of this formulation used in the form of an emulsion in water is just as effective against weeds as 1 kg of a standard commercial product having the same concentration.

Example 7

1 litre of an emulsion spray (25%) containing propanil (3',4'-dichloropropionanilide) as its active ingredient is prepared as follows:

250 g of propanil, 250 g of Phospholipon[R] 80 in 250 ml of ethanol, 5 g of Tagat D, 5 g of Tegonuls 0 and 30 g of Cellosolve are made up to 1 litre with Shellsol A and dissolved.

0.5 litre of this formulation is just as effective against broad-leaved weeds, for example in the cultivation of potatoes, as 1 kg of a standard commercial product having the same concentration.

Example 8

1 kg of a spraying powder (14%) containing metamitron as its active ingredient is prepared as follows:

140 g of metamitron, 160 g of Phospholipon[R] 100 in 80 ml of ethanol, 8 g of Tween 80, 2 g of Span 80, 50 g of Cellosolve, 100 ml of propylene glycol and 1 litre of methanol are dissolved while heating.

400 ml of the resulting solution are kneaded with 650 g of bentonite (colloidal) and the resulting paste dried. This operation is repeated with quantities of 400 ml until the entire solution has been applied to the bentonite. The dry product is ground in the presence of 5 g of Aerosil.

1 kg of this spraying powder (14%) is just as effective against weeds growing in sugar beet as 0.4 kg of a standard commercial product containing 70% of metamitron.

Example 9

1 kg of a spraying powder (12.5%) containing cyanazin as its active ingredient is prepared as follows:

125 g of cyanazin, 150 g of Phospholipon[R] 80 in 50 ml of ethanol, 1 g of DONSS and 24 g of PEG 4000/6000 in solution in ethanol are dissolved in 400 ml of warm chloroform.

The resulting solution is homogeneously mixed with 700 g of bentonite (colloidal) and the resulting paste is dried and ground.

1 kg of this spraying powder (12.5%) is as effective against weeds and wild grass, for example in corn, as 0.5 kg of a standard commercial spraying powder containing 50% of cyanazin.

Example 10

1 litre of an emulsion concentrate (80 g/l) containing desmedipham as its active ingredient is prepared as follows:

80 g of desmedipham, 80 g of Phospholipon[R] 80 in 80 ml of ethanol, 8 g of Tween 80, 2 g of Span 80, 100 ml of 1,2-propane diol and 100 ml of ethanol are made up to 1 litre with Shellsol and dissolved.

1 litre of this formulation (concentration 80 g/l) is just as effective against dicotyledonous weeds in sugar beet as 1 litre of a standard commercial product containing 160 g/l of desmedipham.

Example 11

Production of 1 litre of an emulsion concentrate containing phenmedipham as its active ingredient:

80 g of phenmedipham, 100 g of Phospholipon[R] 55 in 150 ml of ethanol, 2 g of lignin sulfonate, 30 g of Cellosolve and 150 g of propylene glycol are made up to 1 litre with cyclohexanone and dissolved.

1 litre of this formulation (concentration 80 g/l) is just as effective against weeds in sugar beet as 1 litre of a standard commercial product containing 157 g/l of phenmedipham.

Example 12

Production of 1 litre of an emulsifiable concentrate containing propham as its active ingredient:

250 g of propham, 200 g of Phospholipon[R] 55 in 200 ml of ethanol, 8 g of Tween 80, 2 g of Span 80, 20 g of Cellosolve and 100 ml of ethyl acetate are made up to 1 litre with isopropanol and dissolved.

0.5 litre of this formulation, as a pre-emergence herbicide, is just as effective against weeds as 1 kg of a standard commercial product having the same concentration.

Example 13

Production of 1 litre of an emulsion concentrate containing mecoprop+2,4-D as its active ingredient:

50 g of 2,4-D, 200 g of mecoprop, 250 g of Phospholipon[R] 55 in 100 ml of ethanol, 50 g of Cellosolve, 50 g of 1,2-propylene glycol, 8 g of Tween 80 and 2 g of Span 2 are mixed together and made up to 1 litre with ethanol.

1 litre of the resulting solution is as effective against dicotyledonous weeds in lawns and sports fields as 1 kg of a standard commercial product containing twice the quantities of 2,4-D and mecoprop.

Example 14

Production of 400 g of a spraying powder (40%) containing linuron as its active ingredient:

120 g of linuron, 120 g of Phospholipon[R] 55, 1.5 g of Marlowet IHF, 52.5 g of dry glucose and 6.0 g of Bentone EW are homogenised in 1080 g of water using a suitable stirrer and the resulting suspension is spray-dried.

1 kg of this spraying powder (40%) is just as effective against weeds in the cultivation of potatoes as 2.2 kg of a standard commercial product containing 50% of linuron.

Example 15

Production of 1.15 kg of granulate (22%) containing naptalan as its active ingredient:

Ingredients: 600 g of dry glucose, 100 g of Aerosil, 255 g of Phospholipon[R] 38 in 64 g of isopropanol, 265 g of naptalan, 13 g of Marlowet IHF and 13 g of sodium lauryl sulfonate.

The dry glucose and aerosil are initially introduced and mixed in a Eweka 2-kneader with a solution of Phospholipon in isopropanol heated to 60°C. The naptalan, Marlowet IHF and sodium lauryl sulfonate are added to and homogeneously kneaded with the resulting mixture. The mixture is then granulated in an Alexander granulator (perforated cylinder diameter 2 mm product outlet) and dried for 2 hours at 60°C in a recirculating air drying cabinet. Yield: 1.15 kg of granulate.

1 kg of this 22% granulate is as effective in controlling weeds in the cultivation of soya beans as 3.5 kg of a standard commercial product containing 10% of naptalan.

Example 16

Production of 1 litre of an emulsion concentrate (50 g/l) containing DNOC (2,4-dinitro-6-methylphenol):

50 g of DNOC, 40 g of Phospholipon[R] 55, 8 g of Tween 80, 2 g of Span 80, 50 ml of cellulose, 250 ml of xylene, 100 ml of cyclohexanone and 40 g of N-(2-hydroxyethyl)hexanoic acid amide are made up to 1 litre with Shellsol N and dissolved.

Example 17

Production of 1 litre of an emulsion concentrate (60 g/l) containing 2,4,6-trichlorophenyl-4'-nitrophenyl ether (CNP) as its active ingredient:

60 g of CNP, 20 g of Phospholipon[R] 55, 5 g of Marlowet IHF, 60 ml of isophorone, 200 ml of xylene and 20 g of N-(2-hydroxyethyl)-caproic acid amide are made up to 1 litre with Shellsol A and dissolved.

0.5 kg of this formulation used in the form of an emulsion in water is as effective against weeds as 1 kg of a standard commercial product having the same concentration.

Example 18

1 kg of an emulsion concentrate containing flampropmethyl as its active ingredient is prepared as follows:

160 g of flampropmethyl, 160 g of Phospholipon[R] 55, 15 g of N-(2-hydroxyethyl)-caproic acid amide, 90 g of Cremophor EL and 170 g of isophorone are mixed and made up to 1 litre with a mixture of xylene and toluene.

0.5 kg of this concentrate diluted with water in the usual way are as effective against oat grass as 1 kg of the standard commercial product.

This emulsion concentrate may also be applied by the ULV or LV technique when diluted with the same quantity of water. The resulting mixture is a clear solution whereas the commercial product diluted with the same quantity of water gives an inhomogeneous thick emulsion which cannot be sprayed.

Example 19

Production of 400 g of spraying powder (40%) containing metamitron as its active ingredient:

160 g of metamitron, 160 g of Phospholipon[R] 38, 2 g of Marlowet IHF, 8 g of Bentone EW and 70 g of dry glucose are homogenised in 1 litre of water by means of a stirrer, for example of the Ultra-Turax type. The suspension thus obtained is spray-dried. The powder obtained is a wettable powder.

1 kg of this spraying powder (40%) is just as effective against weeds in sugar beet as 1 kg of the usual commercial product containing 70% of metamitron.

Example 20

Production of 400 g of spraying powder (40%) containing cyanazin as its active ingredient:

160 g of cyanazin, 160 g of Phospholipon[R] 38, 2 g of Marlowet IHF, 70 g of dry glucose and 8 g of

Bentone EW are stirred into 1220 g of water and homogenised. The resulting mixture is subsequently spray-dried.

0.2 kg of this spraying powder (40%) is as effective against weeds and wild grass in corn as 0.5 kg of a standard commercial spraying powder containing 50% of cyanazin.

Example 21

Production of 100 g of spraying powder (3%) containing chlorsulforon as its active ingredient:

12 g of chlorsulforon, 228 g of Phospholipon[R] 38, 2.5 g of Marlowet IHF, 51.5 g of dry glucose and 6 g of Bentone EW are homogenised in 1080 g of water by means of a suitable stirrer and the suspension obtained is subsequently spray-dried.

This spraying powder (3%) is as effective against weeds as 1 kg of a standard formulation containing 6% of chlorsulforon.

Example 22

A spraying powder containing chlortoluron is prepared in the same way as in Example 21 using the following ingredients:

12 g of chlortoluron, 228 g of Phospholipon[R] 55, 2.5 g of Marlowet IHF, 51.5 g of dry glucose and 6 g of Bentone EW.

Example 23

Production of 1 kg of an emulsion concentrate containing 80 g/l of desmedipham and 80 g/l of phenmedipham as its active ingredients:

80 g of desmedipham, 80 g of phenmedipham, 160 g of Phospholipon[R] 80, 230 g of toluene, 170 g of isophorone, 150 g of N-(2-hydroxyethyl)-caproic acid amide, 110 g of Cremophor EL and 20 g of PEG 600 are mixed to form an emulsion concentrate.

1 litre of this formulation having an active ingredient concentration of 160 g/l is just as effective against dicotyledonous weeds in sugar beet as 1.8 litres of a standard commercial product having the same concentration of active ingredients.

Example 24

Production of 1 kg of a spraying powder (40%) containing simazin as its active ingredient:

400 g of simazin, 400 g of Phospholipon[R] 38, 5 g of Marlowet IHF, 175 g of dry glucose and 20 g of bentone EW are homogenised with 3600 g of water and the resulting mixture is spray-dried.

1 kg of this formulation is just as effective against dicotyledonous weeds in coffee plantations as 1.9 kg of a commercial product having a simazin concentration of 50%.

Example 25

Production of 1 kg of an emulsifiable concentrate containing Propham as its active ingredient:

170 g of propham, 150 g of Phospholipon[R] 38, 120 g of toluene, 120 g of xylene, 160 g of isophorone, 160 g of N-(2-hydroxyethyl)-heptanoic acid amide, 100 g of PEG 600 and 30 g of monodiglyceride are combined and converted by stirring into a concentrate.

0.6 kg of this formulation as a pre-emergence herbicide is just as effective against weeds as 1 kg of a standard commercial product having the same concentration of propham.

Example 26

Production of 100 g of an emulsion concentrate containing diclofopmethyl as its active ingredient:

16 g of dichlofopmethyl, 16 g of Phospholipon[R] 38, 16 g of N-(2-hydroxyethyl)-caproic acid amide, 8 g of Cremophor EL, 12 g of toluene and 16 g of cyclohexanone are mixed together.

The solution obtained is suitable for application by the ULV or LV technique when diluted with 100 g of water.

Example 27

Production of 400 g of a spraying powder (45%) containing methabenzthiazuron as its active ingredient:

180 g of methabenzthiazuron, 140 g of Phospholipon[R] 38, 2 g of Marlowet IHF, 8 g of Bentone EW and 70 g of dry glucose are made into a suspension by stirring into 1220 g of water using a suitable stirrer, for example of the Ultraturax type. The resulting powder is a spraying powder which when diluted with water gives the required spray mix.

1 kg of this spraying powder (45%) is as effective against weeds in a spring wheat field as 1.2 kg of the usual commercial product containing 704 g of methabenzthiazuron.

Example 28

Production of 400 g of a spraying powder (40%) containing glyphosate as its active ingredient:

160 g of glyphosate, 160 g of Phospholipon[R] 38, 2 g of Marlowet IHF, 8 g of Bentone EW and 70 g of dry glucose are stirred into 1200 g of water and homogenised. The resulting suspension is spray-dried.

As a total herbicide, 1 kg of this product in the form of a 40% spraying powder has the same effect as 2 kg of a standard commercial product containing 48% of glyphosat.

In the following Application Examples, the commercial products containing the active ingredient referred to by its generic name were used as the active ingredient.

Example 29

Comparison test with cyanazine

The use of cyanazin for controlling weeds (couch grass, white goosefoot, black bindweed) in corn. The cyanazin was used in its standard commercial form, namely Blanchol referred hereinafter as herbicide C.

| Test No. | Herbicide (mixture) | | Weed damage in % | Corn damage in % |
|---|---|---|---|---|
| 1 | herbicide C | 4.0 kg/ha | 95 | 25 |
| 2 | herbicide C+<br>rustica oil | 4.0 kg/ha<br>5.0 | 95 | 90 |
| 3 | herbicide C+<br>phospholipid | 4.0 kg/ha<br>4.0 kg/ha | 95 | 5 |
| 4 | herbicide C+<br>rustica oil | 2.0 kg/ha<br>5.0 kg/ha | 70 | 90 |
| 5 | herbicide C+<br>phospholipid | 2.0 kg/ha<br>4.0 kg/ha | 95 | 5 |
| 6 | herbicide C+<br>phospholipid | 4.0 kg/ha<br>2.0 kg/ha | 95 | 5 |
| 7 | herbicide C+<br>phospholipid | 2.0 kg/ha<br>2.0 kg/ha | 85 | 5 |

Example 30

Comparison tests with isoproturon

For controlling foxtail grass, winter wheat fields are treated with various mixtures and the percentage weed destruction is measured.

| Test No. | Mixture | | % Destruction of foxtail grass |
|---|---|---|---|
| 1 | isoproturon (75%) | 2 kg/ha | 100% |
| 2 | isoproturon (75%) | 1 kg/ha | 0% |
| 3 | phospholipid | 6 kg/ha | 0% |
| 4 | isoproturon (75%)+<br>phospholipid | 1.5 kg/ha<br>6 kg/ha | 100% |
| 5 | isoproturon (75%)+<br>phospholipid | 1 kg/ha<br>6 kg/ha | 100% |

Example 31
Comparison test with metamitron
The use of metamitron for weed control in sugar beet after emergence

| Test No. | Mixture | | Weed damage in % |
|---|---|---|---|
| 1 | metamitron (70%) | 2.5 kg/ha | 20% only moderate activity, weeds slightly damaged |
| 2 | metamitron (70%) | 5.0 kg/ha | 90% weeds damaged apart from goose grass |
| 3 | metamitron (70%)+ phospholipid | 2.5 kg/ha 2.5 kg/ha | 90% weeds damaged apart from goose grass |
| 4 | metamitron (70%)+ phospholipid | 2.5 kg/ha 5.0 kg/ha | 92% |
| 5 | metamitron (70%)+ phospholipid | 5.0 kg/ha 2.5 kg/ha | 90% |
| 6 | metamitron (70%)+ phospholipid | 5.0 kg/ha 5.0 kg/ha | 96% all weeds damaged, including goose grass |
| 7 | phospholipid | 5.0 kg/ha | 0% no visible damage |

It is acknowledged that the designations:
Tween 80, Span 80, Cellosolve, Shellsol N, Mazlowet JHF, Tagat, Tegonuls, Cremophor, Bentone EW and Vetza-Turax represent registered Trade Marks of third parties.

**Claims**

1. Phosphatide-containing herbicidal composition, characterized in that it consists of
a) one or more herbicidally active substances and
b) one or more de-oiled natural phospholipid products soluble in ethanol consisting of either 25 to 96% of phosphatidyl choline, or 96% of hydrogenated phosphatidyl choline, and 25 to 0% of phosphatidyl ethanolamine, 20 to 0% of phosphatidyl inositol and the difference to 100% of one or several of N-acyl phosphatidyl ethanolamines, phosphatidyl serine, phosphatidyl glycerol and lysolecithin in a ratio by weight of a:b from 1:0.5 to 1:10 in addition to standard vehicles, diluents, solvents, propellents and/or other inert auxiliaries.

2. A herbicidal composition as claimed in Claim 1, characterised in that constituents a) and b) are present in a ratio by weight of from 1:1 to 1:5.

3. A herbicidal composition as claimed in Claim 1 or 2, characterised in that phosphatidyl choline is used as the phospholipid.

4. A herbicidal composition as claimed in one or more of Claims 1 to 3, characterised in that one or more compounds from the following groups is used as the herbicidally active substance:

1. phenoxy carboxylic acid derivatives corresponding to the following general formula

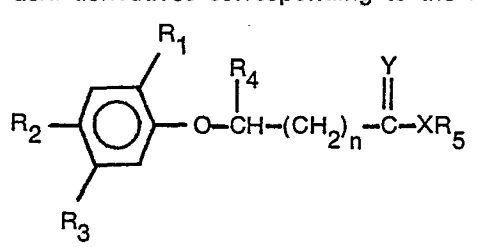

I

in which
a) $R_1$, $R_2$ and $R_3$ represent H, $CH_3$ or halogen with the proviso that at most 2 radicals represent H,
$R_4$ represents H or $CH_3$,
n=0—2,

Y represents O or S

X represents O, NH or S and

$R_5$—where X=O—represents H, linear or branched $C_1$—$C_{12}$-alkyl, hydroxy alkyl, trifluoromethylphenyl an alkali or alkaline-earth cation or an ammonium cation of an organic amine or

$R_5$—where X=NH—represents H, —$NR_2$, phenyl optionally substituted by 1 to 3 halogen atoms or a heterocyclic group, or

b) $R_1$ and $R_3$ represent H,

$R_2$ represents

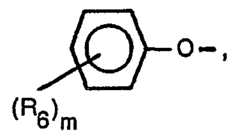

$R_4$ and $R_5$ have the same meaning as in a) and

$R_6$ represents $CH_3$, halogen or trifluoromethyl and

m=1—3.

2. urea derivatives corresponding to the following general formula

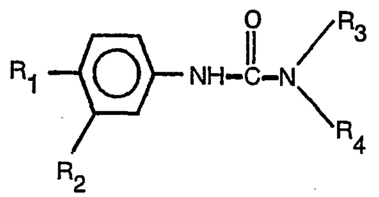

II

in which

$R_1$ and $R_2$, which may be the same or different, represent H, linear or branched $C_1$—$C_4$-alkyl, cycloalkyl, halogen, trifluoromethyl, nitro, alkoxy, optionally halogen-substituted phenoxy, chlorodifluoromethylthio, at most one of the groups $R_1$ and $R_2$ representing H,

$R_3$ represents H, $CH_3$ or $C_2H_5$ and

$R_4$ represents H, cycloalkyl, $C_1$—$C_4$-alkyl, $C_4$-alkynyl or methoxy.

3. herbicidally active organic phosphorus or arsenic compounds; except those compounds of formula III wherein $R_1$ and $R_3$ both are nitrogen, $R_2$ and $R_4$ both are hydrogen, $R_5$ is branched alkyl and $R_6$ is —CO—$C_{2-4}$-alkenyl or branched alkoxy.

4. herbicidally active alcohols or aldehydes;

5. herbicidally active substituted alkane carboxylic acids;

6. aromatic carboxylic acid derivatives corresponding to the following general formula

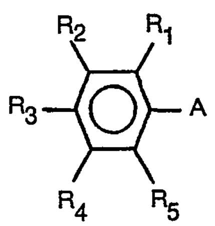

III

in which

$R_1$ to $R_5$, which may be the same or different, represent H, halogen, $NH_2$, methoxy, —$COOCH_3$, —COONH—, naphthyl or —$NO_2$, at most four of the groups $R_1$ to $R_5$ representing H,

A represents —CN, —$COOR_6$, —$CONR_7R_8$, —$CSNR_7R_8$ or —$COSR_6$ where

$R_6$ represents H, alkali, alkaline-earth, alkyl or hydroxy alkyl,

$R_7$ represents H or alkyl and

$R_8$ represents H, alkyl, hydroxy alkyl or benzyl, except those compounds wherein $R_1$ is chlorine, $R_2$ is chlorine or hydrogen, $R_3$ is chlorine, methoxy or hydrogen, $R_4$ is chlorine or nitril, $R_5$ is chlorine or hydrogen and A is nitril, methoxy or nitro.

7. phenol derivatives corresponding to the following general formula

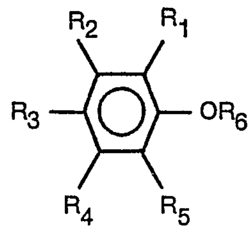

IV

in which

$R_1$ to $R_5$, which may be the same or different, represent H, $NO_2$, linear or branched $C_1$—$C_4$-alkyl, halogen, nitrile or trifluoromethyl, at most four of the groups $R_1$ to $R_5$ representing H, and

$R_6$ represents H, —$COCH_3$, —CSO-alkyl, —$COCH_2Cl$, —COO-alkyl, —N=CH-aryl or phenyl optionally substituted by trifluoromethyl, nitro, alkyl, $NR_2$, alkoxy and/or halogen;

8. anilines corresponding to the following general formula

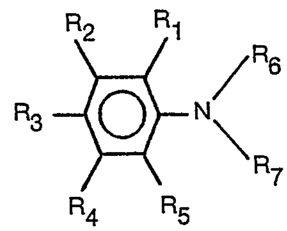

V

in which

$R_1$ represents H, $C_1$—$C_3$-alkyl or nitro,

$R_2$ represents H, halogen or $NH_2$,

$R_3$ represents $C_1$—$C_3$-alkyl, H, $CCF_3$, —$SO_2CH_3$ or —$SO_2NH_2$,

$R_4$ represents H or $C_1$—$C_3$-alkyl,

$R_5$ represents H, $NO_2$ or $C_1$—$C_3$-alkyl,

$R_6$ represents H, $C_1$—$C_3$-alkyl, $C_1$—$C_4$-alkoxy methyl or cyclopropyl methyl and

$R_7$ represents linear or branched $C_1$—$C_5$-alkyl or linear or branched $C_1$—$C_5$-acyl;

9. carbamates corresponding to the following general formula

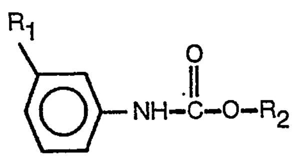

VI

in which

$R_1$ represents H, halogen, $CH_3$ or —$NHCOOC_2H_5$ and

$R_2$ represents H, linear or branched $C_1$—$C_4$-alkyl, halogen alkyl, halogen alkinyl or 3-(methoxycarbamoyl)-phenyl;

10. triazines corresponding to the following general formula

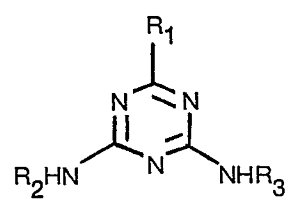

VII

in which

$R_1$ represents halogen, methylthio or methoxy and

$R_2$ and $R_3$, which may be the same or different, represent linear or branched $C_1$—$C_4$-alkyl optionally substituted by a cyano group or azole group;

11. triazinones corresponding to the following general formula

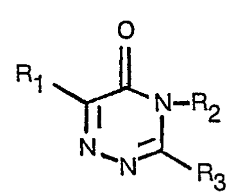

VIII

in which

$R_1$ represents an alkyl group, a substituted aryl group or a cycloaliphatic radical,

$R_2$ represents $NH_2$, —NH-alkyl, or —N=CH-alkyl and

$R_3$ represents $C_1$—$C_4$-alkyl, alkoxy or alkylthio;

12. the other herbicides 3,6-epoxycyclohexane dicarboxylic acid, S-ethyl-N,N-diethyl thiocarbamate, S-ethyl-N,N-hexane methylene thiocarbamate, S-ethyl-N,N-dipropyl thiocarbamate, S-ethyl-N-ethyl-N-cyclohexyl thiocarbamate, S-ethyl-N,N-diisobutyl thiocarbamate, S-propyl-N,N-dipropyl thiocarbamate, S-propyl-N-ethyl-N-butyl thiocarbamate, 2-chloroallyl-N,N-diethyl dithiocarbamate, S-(2,3,3-trichloroallyl)-N,N-diisopropyl thiocarbamate, S-(2,3-dichloroallyl)-N,N-diisopropyl thiocarbamate, S-(4-chlorobenzyl)-N,N-diethyl thiocarbamate, 1,3-dimethyl-1-(5-trifluoromethyl-1,3,4-thiadiazol-1-yl)-urea, 1-(5-ethylsulfonyl-1,3,4-thiadiazol-2-yl)-1,3-dimethyl urea, 2-oxo-1-imidazolidine carboxylic acid-N-isobutyl amide, 1-(benzothiazolyl)-1,3-dimethyl urea, 1,1-ethylene-2,2'-dipyridylium dibromide, 1,1'-dimethyl-4,4'-dipyridylium dichloride.

5. Herbicidal compositions as claimed in one or more of Claims 1 to 4, characterised in that one or more compounds from the group comprising the following compounds is used as the herbicidally active substance:

2,4-dichlorophenoxy acetic acid or a salt or ester thereof,
2,4,5-trichlorophenoxy acetic acid or a salt or ester thereof,
3-(4-isopropyl-phenyl)-1,1-dimethyl urea,
3-(3,4-dichlorophenyl)-1-methoxy-1-methyl urea,
2,4-dinitro-6-methylphenol,
pentachlorophenol,
2,4,6-trichlorophenyl-4'-nitrophenyl ether,
propionic acid-3,4-dichloroanilide,
isopropyl-N-phenyl carbamate,
3-methoxy carbonylaminophenyl-N-(3-methylphenyl)-carbamate,
3-ethoxy carbonylaminophenyl-N-phenyl carbamate,
2-(4-ethylamino-6-chloro-1,3,5-triazin-2-ylamino)-2-methyl propiononitrile,
4-amino-3-methyl-6-phenyl-1,2,4-triazin-5(4H)-one.

6. The use of the compositions claimed in one or more of Claims 1 to 5 for controlling weeds and wild grasses.

7. A process for producing the herbicidal compositions claimed in one or more of Claims 1 to 5, characterised in that the phospholipid is dissolved in an organic solvent or solvent mixture and the herbicide is dissolved in the resulting solution, optionally by heating and/or stirring, after which the solvent or solvent mixture is removed *in vacuo* and the mixture obtained is converted into a standard formulation by the addition of standard fillers and auxiliaries.

8. A process for producing the herbicidal compositions claimed in one or more of Claims 1 to 5, characterised in that the herbicide(s) is dissolved or suspended in an organic solvent with one or more phospholipids and optionally together with standard fillers and auxiliaries, after which the solvent is removed.

9. A process for producing the herbicidal compositions claimed in one or more of Claims 1 to 5, characterised in that one or more water-soluble or alcohol-soluble herbicides is/are dissolved in water or water/alcohol mixtures together with one or more phospholipids by stirring and/or gentle heating and/or by the application of ultrasonic waves, after which the solvent(s) is/are removed.

**Revendications**

1. Composition herbicide contenant un phosphatide, caractérisée en ce qu'elle comprend:

(a) une ou plusieurs substances herbicides actives et

(b) un ou plusieurs produits naturels de phospholipide déshuilés, solubles dans l'éthanol consistant en soit 25 à 96% de phosphatidyl-choline, soit 96% de phosphatidyl-choline hydrogénée, et 25 à 0% de phosphatidyl-éthanolamine, 20 à 0% de phosphatidyl-inositol, et le complément jusqu'à 100% d'une ou plusieurs des N-acyl-phosphatidyl-éthanolamines, phosphatidyl-sérines, phosphatidyl-glycérol et lysolécithine en un rapport pondéral de (a):(b) de 1:0,5 à 1:10, outre les véhicules, diluants, solvants, propulseurs et/our autres agents auxiliaires inertes normalisés.

2. Composition herbicide selon la revendication 1, caractérisée en ce que les constituants (a) et (b) sont présents en un rapport pondéral de 1:1 à 1:5.

3. Composition herbicide selon la revendication 1 ou 2, caractérisée en ce qu'on utilise la phosphatidyl-choline en qualité de phospholipides.

4. Composition herbicide selon l'une quelconque des revendications 1 à 3, caractérisée en ce qu'on utilise, comme substance herbicide active, un ou plusieurs composés choisis dans les groupes suivants:

(1) des dérivés d'acide phénoxycarboxylique répondant à la formule générale

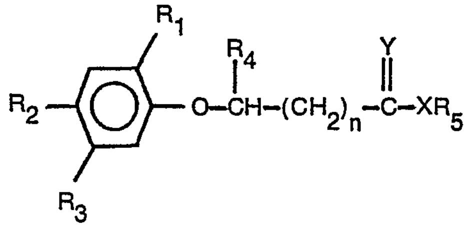

I

dans laquelle

a) $R_1$, $R_2$ et $R_3$ représentent H, $CH_3$ ou un halogène à la condition qu'au maximum 2 radicaux représentent H,

$R_4$ représente H ou $CH_3$,

n=0 à 2,

Y représente O ou S,

X représente O, NH ou S, et $R_5$, lorsque X=O, représente H, un radical alkyle linéaire ou ramifié en $C_1$—$C_{12}$, hydroxyalkyle, trifluorométhylphényle, un cation alcalin ou alcalino-terreux ou un cation ammonium, d'une amine organique, ou

$R_5$, lorsque X=NH, représente H, —$NR_2$, phényle, facultativement substitué par 1 à 3 atomes d'halogène ou un groupe hétérocyclique, ou

b) $R_1$ et $R_3$ représentent H

$R_2$ représente

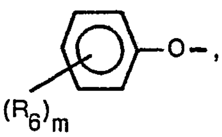

,

$R_4$ et $R_5$ ont les mêmes significations que dans a) et

$R_6$ représente $CH_3$, un halogène ou trifluorométhyle et

m=1 à 3;

(2) des dérivés d'urée qui correspondent à la formule générale ci-après

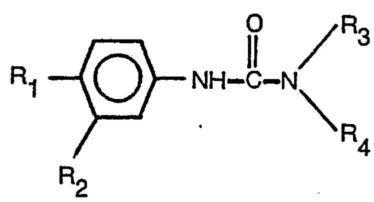

II

dans laquelle

$R_1$ et $R_2$, qui peuvent être identiques ou différents, représentent chacun H, un radical alkylke linéaire ou ramifié en $C_1$—$C_4$, cycloalkyle, halogène, trifluorométhyle, nitro, alcoxy, phénoxy avec substitution facultative par un halogène, chlorodifluorométhylthio, au plus l'un des groupes $R_1$ et $R_2$ représentant H,

$R_3$ représente H, cycloalkyle, alkyle en $C_1$—$C_4$, alkynyle en $C_4$ ou méthoxy;

(3) des composés organiques à activité herbicide de phosphore ou d'arsenic, sauf les composés de formule I dans laquelle $R_1$ et $R_3$ sont tous deux l'azote, $R_2$ et $R_4$ sont tous deux l'hydrogène, $R_5$ est un radical alkyle ramifié et $R_6$ est le groupe —CO-alcényle en $C_2$—$C_4$ ou alcoxy ramifié;

(4) des alcools ou aldéhydes à activité herbicide;

(5) des acides alcane-carboxyliques substitués à activité herbicide;

(6) des dérivés aromatiques d'acides carboxyliques de formule générale

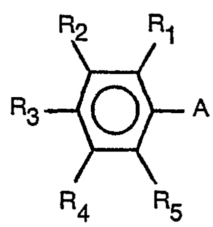

III

dans laquelle

$R_1$ à $R_5$, qui peuvent être identiques ou différents, représentent chacun H, halogène, $NH_2$, méthoxy, —$COOCH_3$, —COONH—, naphtyle ou —$NO_2$, au maximum quatre des groupes $R_1$ à $R_5$ représentant H,

A représente —CN, —$COOR_6$, —$CONR_7R_8$, —$CSNR_7R_8$ our —$COSR_6$, dans lesquels $R_6$ représente H, un métal alcalin, un métal alcalino-terreux, un radical alkyle ou hydroxyalkyle,

$R_7$ représente H ou alkyle, et

$R_8$ représente H, alkyle, hydroxyalkyle ou benzyle, sauf les composés dans lesquels $R_1$ est le chlore, $R_2$ est le chlore ou l'hydrogène, $R_3$ est le chlore, méthoxy ou hydrogène, $R_4$ est le chlore ou le nitrile, $R_5$ est le chlore ou l'hydrogène et A est le nitrile, méthoxy ou nitro,

(7) les dérivés de phénol répondant à la formule générale:

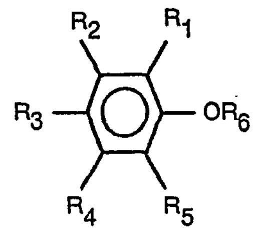

IV

dans laquelle

$R_1$ à $R_5$, qui peuvent être identiques ou différents, représentent chacun H, $NO_2$, un radical alkyle linéaire ou ramifié en $C_1$—$C_4$, halogène, nitrile ou trifluorométhyle, au plus quatre des groupes $R_1$ à $R_5$ représentant H, et

$R_6$ représente H, —$COCH_3$, —CSO-alkyle, —$COCH_2Cl$, —COO-alkyle, —N=CH-aryle ou phényle facultativement substitué par le trifluorométhyle, nitro, alkyle, $NR_2$, alcoxy et/ou halogène;

(8 ) des anilines qui correspondent à la formule générale:

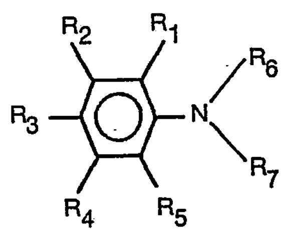

V

dans laquelle

$R_1$ représente H, nitro ou alkyle en $C_1$—$C_3$,

$R_2$ représente H, halogène ou $NH_2$,

$R_3$ représente alkyle en $C_1$—$C_3$, H, $CCF_3$, —$SO_2CH_3$ ou —$SO_2NH_2$,

$R_4$ représente H ou alkyle en $C_1$—$C_3$,

$R_5$ représente H, $NO_2$ ou alkyle en $C_1$—$C_3$,

$R_6$ représente H, alkyle en $C_1$—$C_3$, alcoxy($C_1$—$C_4$)méthyle ou cyclopropyl-méthyle et

$R_7$ représente un alkyle linéaire ou ramifié en $C_1$—$C_5$ ou un acyle linéaire ou ramifié en $C_1$—$C_5$,

(9) les carbamates répondant à la formule générale:

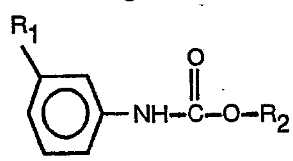

VI

dans laquelle

$R_1$ représente H, halogène, $CH_3$ ou —$NHCOOC_2H_5$ et

$R_2$ représente H, un radical alkyle linéaire ou ramifié en $C_1$—$C_4$, halogéno-alkyle, halogéno-alkynyle ou 3 (méthoxycarbamoyl)-phényle;

(10) des triazines répondant à la formule générale:

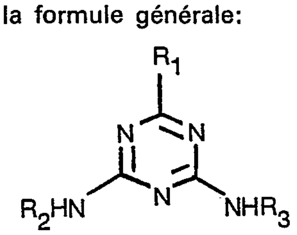

VII

dans laquelle

$R_1$ représente halogène, méthylthio ou méthoxy, et

$R_2$ et $R_3$, qui peuvent être identiques ou différents, représentent chacun un radical alkyle linéaire ou ramifié en $C_1$—$C_4$ facultativement substitué par un groupe cyano ou un groupe azole,

(11) les triazinones répondant à la formule générale:

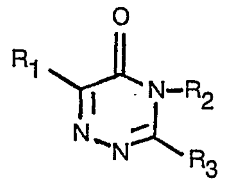

VIII

dans laquelle

$R_1$ représente un radical alkyle, des radicaux aryle substitués ou un radical cyclo-aliphatique,

$R_2$ représente $NH_2$, —NH-alkyle ou —N=CH-alkyle, et

$R_3$ représente un radical alkyle en $C_1$—$C_4$, alcoxy ou alkylthio;

(12) d'autres herbicides tels que l'acide 3,6-époxycyclohexane dicarboxylique, le thiocarbamate de S-éthyl-N,N-diéthyle, le thiocarbamate de S-éthyl-N,N-hexane méthylène, le thiocarbamate de S-éthyl-N,N-dipropyle, le thiocarbamate de S-éthyl-N-éthyl-N-cyclohexyle, le thiocarbamate de S-éthyl-N,N-diisobutyle, le thiocarbamate de S-propyl-N,N-dipropyle, le thiocarbamate de S-propyl-N-éthyl-N-butyle, le dithiocarbamate de 2-chlorallyl-N,N-diéthyle, le thiocarbamate de S-(2,3,3-trichlorallyl)-N,N-diisopropyle, le thiocarbamate de S-(2,3-dichlorallyl)-N,N-diisopropyle, le thiocarbamate de S-(4-chlorobenzyl)-N,N-diéthyle, la 1,3-diméthyl-1-(5-trifluorométhyl-1,3,4-thiadiazol-1-yl)-urée, la 1-(5-éthylsulfonyl-1,3,4-thiadiazol-2-yl)-1,3-diméthylurée, l'amide N-isobutylique d'acide 2-oxo-1-imidazolidine-carboxylique, la 1-(benzothiazolyl)-1,3-diméthylurée, le dibromure de 1,1-éthylène-2,2'-dipyridylium, le di-chlorure de 1,1'-diméthyl-4,4'-dipyridylium.

5. Compositions herbicides selon l'une quelconque des revendications 1 à 4, caractérisées en ce qu'on utilise un ou plusieurs composés choisis dans l'énumération ci-après à titre de substance herbicide active:

l'acide 2,4-dichlorophénoxy-acétique ou un sel ou ester de celui-ci,

l'acide 2,4,5-trichlorophénoxy-acétique ou un sel ou ester de celui-ci,

la 3-(4-isopropyl-phényl)-1,1-diméthyl-urée,

la 3-(3,4-dichlorophényl)-1-méthoxy-1-méthyl-urée,

le 2,4-dinitro-6-méthylphénol,

le pentachlorophénol,

l'éther 2,4,6-trichlorophényl-4'-nitrophénylique,

le 3,4-dichloroanilide d'acide propionique,

le carbamate d'isopropyl-N-phényle,

le carbamate de 3-méthoxy-carbonylaminophényl-N-(3-méthylphényle),

le carbamate de 3-éthoxy-carbonylaminophényl-N-phényle,

le 2-(4-éthylamino-6-chloro-1,3,5-triazine-2-ylamino)-2-méthyl-propionitrile,

la 4-amino-3-méthyl-6-phényl-1,2,4-triazine-5(4H)-one.

6. Utilisation des compositions revendiquées dans une ou plusieurs des revendications 1 à 5 pour lutter contre les mauvaises herbes et les herbes folles.

7. Procédé de production de compositions herbicides selon l'une quelconque des revendications 1 à 5, caractérisé en ce qu'on dissout le phospholipide dans un solvant ou mélange de solvants organiques et on dissout l'herbicide dans la solution résultante, facultativement en chauffant et/ou en agitant, après quoi on élimine sous vide le solvant ou le mélange de solvants et on convertit le mélange obtenu en une composition normalisée par addition de charges normalisées et d'agents auxiliaires.

8. Procédé de production de compositions herbicides selon l'une quelconque des revendications 1 à 5, caractérisé en ce qu'on dissout ou met en suspension le ou les herbicides dans un solvant organique avec un ou plusieurs phospholipides et facultativement ensemble avec des charges normalisées et d'agents auxiliaires, après quoi on élimine le solvant.

9. Procédé de production de compositions herbicides selon l'une quelconque des revendications 1 à 5, caractérisé en ce qu'on dissout dans l'eau ou des mélanges d'eau et d'alcool un ou plusieurs herbicides solubles dans l'eau ou solubles dans les alcools, ensemble avec un ou plusieurs phospholipides en agitant, et/ou en chauffant doucement et/ou en appliquant des ondes ultrasonores, après quoi on élimine le ou les solvants.

**Patentansprüche**

1. Phosphatid-halitge Herbizid-Zusammensetzung, dadurch gekennzeichnet, daß sie aus

a) einem oder mehreren Herbizid-Wirkstoffen und

b) einem oder mehreren entölten, in Ethanol löslichen, natürlichen Phospholipid-Produkten bestehend aus entweder 25 bis 96% Phosphatidylcholin oder 96% hydriertem Phosphatidylcholin und 25 bis 0% Phosphatidylethanolamin, 20 bis 0% Phosphatidylinosat und der Differenz zu 100% aus einen oder mehreren von N-Acylphosphatidylethanolaminen, Phosphatidylserin, Phosphatidylglycerin und Lysolecithin im Gewichtsverhältnis a:b von 1:0,5 bis 1:10 neben üblichen Träger-, Verdünnungs-, Lösungs-, Versprühungs- und/oder anderen inerten Hilfsmitteln besteht.

2. Herbizid-Zusammensetzung gemäß Anspruch 1, dadurch gekennzeichnet, daß die Bestandteile a) und b) im Gewichtsverhältnis 1:1 bis 1:5 vorliegen.

3. Herbizid-Zusammensetzung gemäß Anspruch 1 oder 2, dadurch gekennzeichnet, daß als Phospholipid Phosphoidylcholin eingesetzt wird.

4. Herbizid-Zusammensetzung gemäß einem oder mehreren der Ansprüche 1 bis 3, dadurch gekennzeichnet, daß als Herbizid-Wirkstoff eine oder mehrere Verbindungen aus den Gruppen eingesetzt wird:

1. Phenoxycarbonsäurederivate der allgemeinen Formel I

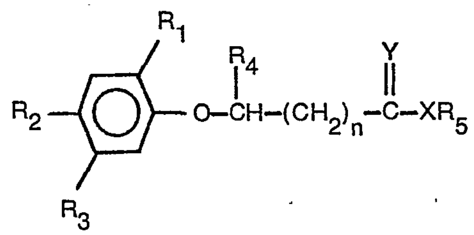

in der

a) $R_1$, $R_2$, $R_3$=H, $CH_3$ oder Halogen sind, wobei jedoch höchstens zwei Reste H bedeuten,
$R_4$=H oder $CH_3$,
n=0—2,
Y=O oder S,
X=O, NH oder S, und
$R_5$, wenn X=O, =H, geradkettiges oder verzwiegtes $C_{1-12}$-Alkyl, Hydroxyalkyl, Trifluoromethylphenyl, ein Alkali- oder Erdalkali-Kation oder ein Ammonium-Kation eines organischen Amins oder
$R_5$, wenn X=NH, =H, —$NR_2$, ggfs. mit 1—3 Haloatomen subst. Phenyl oder eine Heterocyclogruppe ist, oder

b) $R_1$ und $R_3$=H,

$R_2$= 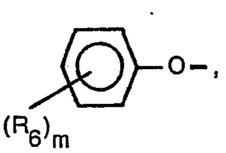

$R_4$ und $R_5$ die gleiche Bedeutung wie bei a) haben und
$R_6$=$CH_3$, Halogen oder Trifluormethyl und
m=1—3 bedeuten;

2. Harnstoffderivate der allgemeinen Formel II

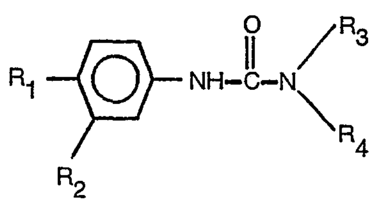

II

worin

$R_1$ und $R_2$, die gleich oder verschieden sein können, H, geradkettiges oder verzweigtes $C_{1-4}$-Alkyl, Cycloalkyl, Halogen, Trifluormethyl, Nitro, Alkoxy, ggfs. durch Halogen subst. Phenoxy, Chlordifluormethylthio ist, wobei höchstens eine der Gruppen $R_1$ und $R_2$ H bedeuten,
$R_3$=H, $CH_3$ oder $C_2H_5$ und
$R_4$=H, Cycloalkyl, $C_{1-4}$-Alkyl, $C_4$-Alkinyl oder Methoxy bedeuten;

3. herbizid-wirksame organische Phosphor- oder Arsenverbindungen;
4. herbizid-wirksame Alkohole oder Aldehyde;
5. herbizid-wirksame subst. Alkancarbonsäuren;
6. aromatische Carbonsäure-Derivate der allgemeinen Formel III

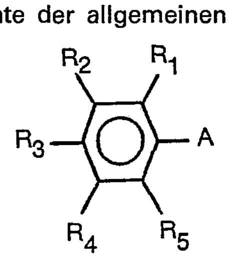

III

worin

$R_1$—$R_5$, die gleich oder verschieden sein können, H, Halogen, $NH_2$, Methoxy, —$COOCH_3$, —COONH-Naphtyl oder —$NO_2$ bedeuten, wobei höchstens vier der Gruppen $R_1$—$R_5$ H bedeuten, und

A=—CN, —$COOR_6$, —$CONR_7R_8$, —$CSNR_7R_8$ oder —$COSR_6$ bedeuten, worin $R_6$=H, Alkali, Erdalkali, Alkyl oder Hydroxyalkyl, $R_7$=H oder Alkyl und $R_8$=H, Alkyl, Hydroxyalkyl oder Benzyl bedeuten;

7. Phenol-Derivate der allgemeinen Formel IV

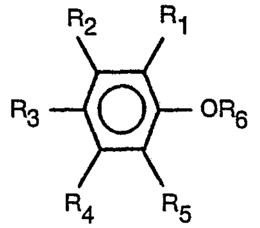

IV

worin

$R_1$—$R_5$, die gleich oder verschieden sein können, H, $NO_2$, geradkettiges oder verzweigtes $C_{1-4}$-Alkyl, Halogen, Nitril oder Trifluormethyl sind, wobei höchstens vier der Gruppen $R_1$—$R_5$ H bedeuten, und

$R_6$=H, —$COCH_3$, —CSO-Alkyl, —$COCH_2Cl$, —COO-Alkyl, —N=CH-Aryl oder ggfs. durch Trifluormethyl, Nitro, Alkyl, $NR_2$, Alkoxy und/oder Halogen subst. Phenyl ist;

8. Aniline der allgemeinen Formel V

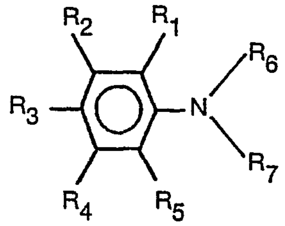

V

worin

$R_1$=H, $C_{1-3}$-Alkyl oder Nitro,

$R_2$=H, Halogen oder $NH_2$,

$R_3$=$C_{1-3}$-Alkyl, H, $CCF_3$, —$SO_2CH_3$ oder —$SO_2NH_2$,

$R_4$=H, oder $C_{1-3}$-Alkyl,

$R_5$=H, $NO_2$ oder $C_{1-3}$-Alkyl,

$R_6$=H, $C_{1-3}$-Alkyl, $C_{1-4}$-Alkoxymethyl oder Cyclopropylmethyl und

$R_7$=verzweigtes oder geradkettiges $C_{1-5}$-Alkyl oder geradkettiges oder verzweigtes $C_{1-5}$-Acyl ist;

9. Carbamate der allgemeinen Formel VI

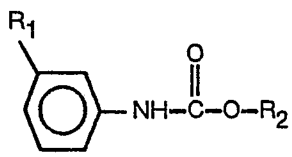

VI

worin

$R_1$=H, Halogen, $CH_3$ oder —$NHCOOC_2H_5$ und

$R_2$=H, geradkettiges oder verzweigtes $C_{1-4}$-Alkyl, Halogenalkyl, Halogenalkinyl oder 3-(methoxycarbamoyl)-phenyl ist;

10. Triazine der allgemeinen Formel VII

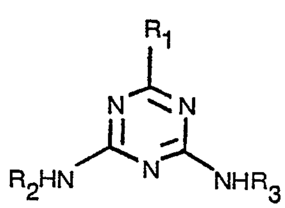

VII

worin

$R_1$=Halogen, Methylthio oder Methoxy und

$R_2$ und $R_3$, die gleich oder verschieden sein können, =geradkettiges oder verzweigtes $C_{1-4}$-Alkyl, das ggfs. mit einer Cyanogruppe oder Azolgruppe substituiert ist;

11. Triazinone der allgemeinen Formel VIII

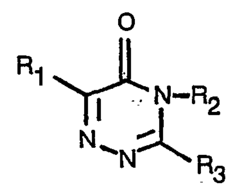

VIII

worin

$R_1$=eine Alkylgruppe, eine substituiert Arylgruppe oder ein cycloaliphatischer Rest,
$R_2$=$NH_2$, —NH-Alkyl oder —N=—CH-Alkyl und
$R_3$=$C_{1-4}$-Alkyl, Alkoxy oder Alkylthio ist;

12. als sonstige Herbizide: 3,6-Epoxy-cyclohexandicarbonsäure, S-Ethyl-N,N-diäthyl-thiocarbamat, S-Ethyl-N,N-hexanmethylen-thiocarbamat, S-Ethyl-N,N-dipropyl-thiocarbamat, S-Ethyl-N-ethyl-N-cyclohexyl-thiocarbamat, S-Ethyl-N,N-diisobutylthiocarbamat, S-Propyl-N,N-dipropyl-thiocarbamat, S-Propyl-N-ethyl-N-butyl-thiocarbamat, 2-Chlorallyl-N,N-diethyl-dithiocarbamat, S-(2,3,3-Trichlorallyl)-N,N-diisopropylthiocarbamat, 2-(2,3-Dichlorallyl)-N,N-diisopropylthiocarbamat, S-(4-Chlorbenzyl)-N,N-diethylthiocarbamat, 1,3-Dimethyl-1-(5-trifluormethyl-1,3,4-thiadiazol-1-yl)-harnstoff, 1-(5-Ethylsulfonyl-1,3,4-thiadiazol-2-yl)-1,3-dimethylharnstoff, 2-Oxo-1-imidazolidincarbonsäure-N-isobutylamid, 1-(Benzothiazolyl)-1,3-dimethylharnstoff, 1,1-Ethylen-2,2'-dipyridyliumdibromid, 1,1'-Dimethyl-4,4'-dipyridylium-dichlorid.

5. Herbizid-Zusammensetzungen gemäß einem oder mehreren der Ansprüche 1 bis 4, dadurch gekennzeichnet, daß als Herbizid-Wirkstoff eine oder mehrere Verbindungen aus der Gruppe, bestehend aus den folgenden Verbindungen, eingesetzt wird:

2,4-Dichlorphenoxyessigsäure oder ein Salz oder ein Ester hiervon,
2,4,5-Trichlorphenoxyessigsäure oder ein Salz oder ein Ester hiervon,
3-(4-Isopropyl-phenyl)-1,1-dimethylharnstoff,
3-(3,4-Dichlorphenyl)-1-methoxy-1-methylharnstoff,
2,4-Dinitro-6-methylphenol,
Pentachlorphenol,
2,4,6-Trichlorphenyl-4'-nitrophenylether,
Propionsäure-3,4-dichloranilid,
Iso-propyl-N-phenylcarbamat,
3-Methoxycarbonylamino-phenyl-N-(3-methylphenyl)-carbamat,
3-Ethoxycarbonylamino-phenyl-N-phenylcarbamat,
2-(4-Ethylamino-6-chlor-1,3,5-triazin-2-ylamino)-2-methyl-propiononitril,
4-Amino-3-methyl-6-phenyl-1,2,4-triazin-5(4H)-on.

6. Verwendung der Zusammensetzungen gemäß einem oder mehreren der Ansprüche 1 bis 5 zur Bekämpfung von Unkräutern und Ungräsern.

7. Verfahren zur Herstellung von Herbizid-Zusammensetzung gemäß einem oder mehreren der Ansprüche 1 bis 5, dadurch gekennzeichnet, daß das Phospholipid in einem organischen Lösungsmittel bzw. Lösungsmittelgemisch gelöst wird und in diese Lösung ggfs. durch Erwärmen und/oder Rühren das Herbizid gelöst und anschließend das Lösungsmittel oder Lösungsmittelgemisch im Vakuum abgezogen wird und die erhaltene Mischung unter Zusatz üblicher Füll- und Hilfsmittel in eine übliche Anwendungsform überführt wird.

8. Verfahren zur Herstellung von Herbizid-Zusammensetzungen gemäß einem oder mehreren der Ansprüche 1 bis 5, dadurch gekennzeichnet, daß das oder die Herbizide mit einem oder mehreren Phospholipiden ggfs. unter Zusatz üblicher Füll- und Hilfsmittel in einem organischen Lösungsmittel gelöst bzw. aufgeschlämmt und das Lösungsmittel danach abgezogen wird.

9. Verfahren zur Herstellung von Herbizid-Zusammensetzungen gemäß einem oder mehreren der Ansprüche 1 bis 5, dadurch gekennzeichnet, daß ein oder mehrere, in Wasser oder Alkohol lösliche Herbizide in Wasser oder Wasser-Alkohol-Mischungen zusammen mit einem oder mehreren Phospholipiden unter Rühren und/oder leichter Erwärmung, und/oder Ultraschall gelöst und das Lösungsmittel bzw. Lösungsmittelgemisch abgezogen wird.